(19) Europäisches Patentamt

European Patent Office

Office européen des brevets

(11) **EP 4 349 912 A1**

(12) # EUROPEAN PATENT APPLICATION
published in accordance with Art. 153(4) EPC

(43) Date of publication:
**10.04.2024 Bulletin 2024/15**

(21) Application number: **23805437.3**

(22) Date of filing: **24.04.2023**

(51) International Patent Classification (IPC):
*C08L 67/02* (2006.01)   *C08L 71/12* (2006.01)
*C08L 25/10* (2006.01)   *C08L 53/00* (2006.01)
*C08L 63/00* (2006.01)   *C08K 7/24* (2006.01)
*C08K 3/04* (2006.01)   *C08J 3/22* (2006.01)

(86) International application number:
**PCT/KR2023/005518**

(87) International publication number:
**WO 2024/043430 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.08.2022   KR 20220106747**

(71) Applicant: **LG Chem, Ltd.
Seoul 07336 (KR)**

(72) Inventors:
• **CHOI, Gi Dae**
  **Daejeon (KR)**
• **KWON, Ohmin**
  **Daejeon (KR)**
• **HAM, Myong Jo**
  **Daejeon (KR)**
• **KIM, Kwang Joon**
  **Daejeon (KR)**

(74) Representative: **Goddar, Heinz J.
Boehmert & Boehmert
Anwaltspartnerschaft mbB
Pettenkoferstrasse 22
80336 München (DE)**

(54) **CONDUCTIVE RESIN COMPOSITION, METHOD FOR PREPARING SAME, AND MOLDED PRODUCT COMPRISING SAME**

(57)   The present invention relates to a conductive resin composition, a method of preparing the same, and a molded article including the same. The present invention has an effect of providing a conductive resin composition having excellent moisture stability and heat resistance in addition to excellent appearance, rigidity, and conductivity; being capable of minimizing the influence of moisture and heat when exposed to external environments due to these properties; and thus being suitable for exterior parts replacing metal parts used in automobiles, a method of preparing the conductive resin composition, and a molded article including the conductive resin composition.

[FIG. 1]

**Description**

[Technical Field]

[Cross-Reference to Related Application]

This application claims priority to Korean Patent Application No. 10-2022-0106747, filed on August 25, 2022, in the Korean Intellectual Property Office, the disclosure of which is incorporated herein by reference.

The present invention relates to a conductive resin composition, a method of preparing the same, and a molded article including the same. More particularly, the present invention relates to a conductive resin composition having excellent moisture stability and heat resistance in addition to excellent appearance, rigidity, and conductivity; being capable of minimizing the influence of moisture and heat when exposed to external environments due to these properties; and thus being suitable for exterior parts replacing metal parts used in automobiles, a method of preparing the conductive resin composition, and a molded article including the conductive resin composition.

[Background Art]

In recent years, attempts have been made to manufacture automotive exterior parts using resins to improve fuel efficiency of automobiles. In particular, a blend resin of polyphenylene ether and a polyamide is widely used as a material for automotive exterior parts.

The blend resin is a resin prepared for the purpose of combining excellent heat resistance and impact resistance of polyphenylene ether and excellent solvent resistance of a polyamide. However, the blend resin does not have sufficient heat resistance due to poor compatibility.

In general, automotive exterior parts require painting, and electrostatic painting is mainly used in consideration of environmental aspects, reduction of total volatile organic compounds (TVOCs), and appearance. To improve the efficiency of electrostatic painting, attempts have been made to impart conductivity by adding a conductive material such as carbon fiber or carbon black to the blend resin. However, when the conductive material is added, problems such as deterioration in appearance and reduction in impact resistance occur.

US Patent No. 6352654 discloses a conductive resin composition prepared by mixing a polyphenylene ether-polyamide blend resin and conductive carbon black to improve adhesion and ductility of a paint to the blend resin.

However, such a blend resin may have a limit in improving heat resistance. In addition, when a molded product is manufactured using the blend resin, pinholes may be generated on the surface of the molded product, and thus appearance may be deteriorated. In addition, mechanical properties or dimensional stability may be deteriorated by moisture.

Therefore, there is increasing demand for development of a conductive resin composition having excellent appearance, mechanical properties, and conductivity, being capable of minimizing the influence of moisture and heat when exposed to external environments, and thus being applicable to automotive exterior parts.

[Disclosure]

[Technical Problem]

Therefore, the present invention has been made in view of the above problems, and it is one object of the present invention to provide a conductive resin composition having excellent moisture stability and heat resistance in addition to excellent appearance, rigidity, and conductivity; being capable of minimizing the influence of moisture and heat when exposed to external environments due to these properties; and thus being suitable for exterior parts replacing metal parts used in automobiles and a method of preparing the conductive resin composition.

It is another object of the present invention to provide a molded article manufactured using the conductive resin composition for exterior parts replacing metal parts used in automobiles.

The above and other objects can be accomplished by the present invention described below.

[Technical Solution]

In accordance with one aspect of the present invention, provided is a conductive resin composition including:

100 parts by weight of a base resin (A) including a first polyester and a polyarylene ether;
8 to 20 parts by weight of two or more first additives (B) selected from a first polar polyolefin resin, a block copolymerization impact modifier, and multifunctional reactive agents; and

4 to 14 parts by weight of three or more second additives (C) selected from a second polar polyolefin resin, a second polyester, carbon nanotubes, and carbon nanoplates,
wherein the conductive resin composition provides a sea-island structure that provides a continuous phase (sea), a dispersed phase (island), and an additional dispersed phase (sub island),
wherein the continuous phase (sea) consists of the first polyester of the base resin (A), the first polar polyolefin resin and the multifunctional reactive agents of the first additives (B), and the second polar polyolefin resin of the second additives (C),
the dispersed phase (island) consists of the polyarylene ether of the base resin (A), and
the additional dispersed phase (sub island) consists of the block copolymerization impact modifier of the first additives (B) and the carbon nanotubes and the carbon nanoplates of the second additives (C).

In accordance with another aspect of the present invention, provided is a conductive resin composition including: 100 parts by weight of a base resin including a polyester and a polyarylene ether; 1 to 20 parts by weight of a block copolymerization impact modifier; 1 to 20 parts by weight of multifunctional reactive agents; and 0.1 to 10 parts by weight of one or more selected from carbon nanotubes and carbon nanoplates, wherein the conductive resin composition has a surface resistance of $10^8$ Ohm/sq or less.

In accordance with still another aspect of the present invention, provided is a method of preparing a conductive resin composition, the method including:

kneading and extruding 100 parts by weight of a base resin (A) including a first polyester and a polyarylene ether;
8 to 20 parts by weight of two or more first additives (B) selected from a first polar polyolefin resin, a block copolymerization impact modifier, and multifunctional reactive agents; and
4 to 14 parts by weight of three or more second additives (C) selected from a second polar polyolefin resin, a second polyester, carbon nanotubes, and carbon nanoplates using an extruder equipped with 9 or more kneading blocks to provide a sea-island structure that provides a continuous phase (sea), a dispersed phase (island), and an additional dispersed phase (sub island) within the continuous phase,
wherein the continuous phase (sea) consists of the first polyester of the base resin (A), the first polar polyolefin resin and the multifunctional reactive agents of the first additives (B), and the second polar polyolefin resin of the second additives (C),
the dispersed phase (island) consists of the polyarylene ether of the base resin (A), and
the additional dispersed phase (sub island) consists of the block copolymerization impact modifier of the first additives (B) and the carbon nanotubes and the carbon nanoplates of the second additives (C).

In accordance with yet another aspect of the present invention, provided is a molded article including the conductive resin composition.

[Advantageous Effects]

The present invention has an effect of providing a conductive resin composition having excellent moisture stability and heat resistance in addition to excellent appearance, rigidity, and conductivity; being capable of minimizing the influence of moisture and heat when exposed to external environments due to these properties; and thus being suitable for exterior parts replacing metal parts used in automobiles and a method of preparing the conductive resin composition.

In addition, a molded article manufactured using the composition has excellent dimensional stability when exposed to moisture, and thus dimensional change of the molded article when exposed to external environments can be minimized.

Therefore, the composite resin composition for automotive interior materials and the molded article according to the present invention can be applied to exterior parts replacing metal parts used in automobiles, such as exterior panels, doors, fuel inlets, and charging ports.

[Description of Drawings]

FIG. 1 schematically illustrates an extruder equipped with 9 or more kneading blocks for preparing the conductive resin composition of the present invention.
FIG. 2 shows a sea-island structure provided in Example 1 described later, and the sea-island structure consists of a continuous phase (sea), a dispersed phase (island), and an additional dispersed phase (sub island) formed in the dispersed phase (island).

[Best Mode]

Hereinafter, a conductive resin composition, a method of preparing the same, and a molded article including the same according the present invention will be described in detail.

The present inventors confirmed that, when a conductive resin composition was prepared by mixing a base resin including a first polyester and a polyarylene ether, two or more first additives selected from a first polar polyolefin resin, a block copolymerization impact modifier, and multifunctional reactive agents, and three or more second additives selected from a second polar polyolefin resin, a second polyester, carbon nanotubes having a specific BET, and plate-shaped carbon nanoplates in a predetermined composition ratio, and a molded article including the conductive resin composition was manufactured, the molded article provided a sea-island structure providing a continuous phase (sea), a dispersed phase (island), and an additional dispersed phase (sub island) within the continuous phase, and the molded article had excellent appearance, rigidity, and conductivity while being unaffected by moisture and heat when exposed to external environments. Based on these results, the present inventors conducted further studies to complete the present invention.

The conductive resin composition of the present invention includes 100 parts by weight of a base resin (A) including a first polyester and a polyarylene ether; 8 to 20 parts by weight of two or more first additives (B) selected from a first polar polyolefin resin, a block copolymerization impact modifier, and multifunctional reactive agents; and 4 to 14 parts by weight of three or more second additives (C) selected from a second polar polyolefin resin, a second polyester, carbon nanotubes, and carbon nanoplates. In this case, the conductive resin composition has excellent moisture stability and heat resistance in addition to excellent appearance, rigidity, and conductivity, is capable of minimizing the influence of moisture and heat when exposed to external environments, and thus is applicable to exterior parts replacing metal parts used in automobiles.

As another example, the conductive resin composition of the present invention includes 100 parts by weight of a base resin (A) including a first polyester and a polyarylene ether; 8 to 20 parts by weight of two or more first additives (B) selected from a first polar polyolefin resin, a block copolymerization impact modifier, and multifunctional reactive agents; and 4 to 14 parts by weight of three or more second additives (C) selected from a second polar polyolefin resin, a second polyester, carbon nanotubes, and carbon nanoplates.

The conductive resin composition provides a sea-island structure that provides a continuous phase (sea), a dispersed phase (island), and an additional dispersed phase (sub island).

In this case, the continuous phase (sea) consists of the first polyester of the base resin (A), the first polar polyolefin resin and the multifunctional reactive agents of the first additives (B), and the second polar polyolefin resin of the second additives (C).

The dispersed phase (island) consists of the polyarylene ether of the base resin (A).

The additional dispersed phase (sub island) consists of the block copolymerization impact modifier of the first additives (B) and the carbon nanotubes and the carbon nanoplates of the second additives (C). In this case, the conductive resin composition has excellent moisture stability and heat resistance in addition to excellent appearance, rigidity, and conductivity, is capable of minimizing the influence of moisture and heat when exposed to external environments, and thus is applicable to exterior parts replacing metal parts used in automobiles.

As another example, the conductive resin composition of the present invention includes 100 parts by weight of a base resin including a polyester and a polyarylene ether; 1 to 20 parts by weight of a block copolymerization impact modifier; 1 to 20 parts by weight of multifunctional reactive agents; and 0.1 to 10 parts by weight of one or more selected from carbon nanotubes and carbon nanoplates, and has a surface resistance of $10^8$ Ohm/sq or less. In this case, physical property balance, heat resistance, conductivity, moisture stability, and appearance may be excellent.

As another example, the method of preparing the conductive resin composition of the present invention includes a step of kneading and extruding 100 parts by weight of a base resin (A) including a first polyester and a polyarylene ether; 8 to 20 parts by weight of two or more first additives (B) selected from a first polar polyolefin resin, a block copolymerization impact modifier, and multifunctional reactive agents; 4 to 14 parts by weight of three or more second additives (C) selected from a second polar polyolefin resin, a second polyester, carbon nanotubes, and carbon nanoplates using an extruder equipped with 9 or more kneading blocks to provide a sea-island structure that provides a continuous phase (sea), a dispersed phase (island), and an additional dispersed phase (sub island) within the continuous phase (see and island).

In this case, the continuous phase (sea) consists of the first polyester of the base resin (A), the first polar polyolefin resin and the multifunctional reactive agents of the first additives (B), and the second polar polyolefin resin of the second additives (C), the dispersed phase (island) consists of the polyarylene ether of the base resin (A), and the additional dispersed phase (sub island) consists of the block copolymerization impact modifier of the first additives (B) and the carbon nanotubes and the carbon nanoplates of the second additives (C). In this case, the conductive resin composition has excellent moisture stability and heat resistance in addition to excellent appearance, rigidity, and conductivity, is capable of minimizing the influence of moisture and heat when exposed to external environments, and thus is applicable to exterior parts replacing metal parts used in automobiles.

Hereinafter, each component of the conductive resin composition of the present invention will be described in detail.

## (A) Base resin

The base resin (A) of the present invention may be composed of a first polyester capable of providing a continuous phase (sea) of a sea-island structure and a polyarylene ether capable of providing a dispersed phase (island) of the sea-island structure.

## First polyester

The first polyester of the present invention preferably includes one or more selected from a polyalkylene terephthalate, a poly(ester)urethane, and a polyether ester, more preferably a polyalkylene terephthalate. In this case, appearance and electromagnetic wave shielding performance may be excellent.

As a specific example, the polyalkylene terephthalate may include one or more selected from the group consisting of polyethylene terephthalate, polypropylene terephthalate, and polybutylene terephthalate, preferably polybutylene terephthalate. In this case, appearance and electromagnetic wave shielding performance may be excellent.

For example, the polybutylene terephthalate may be obtained through polymerization by esterification of butane-1,4-diol and terephthalic acid or transesterification of butane-1,4-diol and dimethyl terephthalate.

The polyester resin is preferably a copolymer or homopolymer containing 70 to 100 % by weight of an alkylene terephthalate as a repeat unit.

In the present disclosure, the weight ratio of a repeat unit in a resin or copolymer may be a value calculated by converting the repeat unit into a monomer, or the weight ratio of a monomer added during polymerization of the resin or the copolymer.

For example, the alkylene terephthalate copolymer may be obtained by transesterification of 70 to 100 % by weight, preferably 70 to 99 % by weight of butylene terephthalate and 0 to 30 % by weight, preferably 1 to 30 % by weight of ethylene terephthalate or propylene terephthalate.

Based on the content of the base resin, the first polyester is preferably included in an amount of 51 to 74 % by weight, more preferably 55 to 72 % by weight, still more preferably 60 to 70 % by weight. Within this range, conductivity, appearance, and moisture stability may be excellent.

The first polyester has a melt index (MI) (250 °C, 2.16 kg) of preferably 5 to 50 g/10 min, more preferably 10 to 40 g/10 min, still more preferably 15 to 35 g/10 min, still more preferably 20 to 30 g/10 min. Within this range, conductivity, heat resistance, and electromagnetic wave shielding performance may be excellent.

For example, the first polyester may be a polyester modified by chemical modification, preferably a modified polyalkylene terephthalate, more preferably a modified polybutylene terephthalate. In this case, impact strength may be further improved.

For example, the chemical modification may be performed by copolymerizing a major monomer, such as an alkylene terephthalate, and one or more selected from the group consisting of polytetramethylene glycol (PTMG), polypropylene glycol (PPG), polyethylene glycol (PEG), a low molecular weight aliphatic polyester, and a low molecular weight aliphatic polyamide as comonomers.

Unless specified otherwise, methods commonly used in the art to which the present invention pertains may be used as a method of preparing a first polyester without particular limitation. For example, interfacial polymerization, melt condensation polymerization, solution condensation polymerization, or transesterification may be used.

## Polyarylene ether

The polyarylene ether of the present invention is preferably polyphenylene ether (PPE), and as a specific example, may include one or more selected from the group consisting of poly(2,6-dimethyl-1,4-phenylene)ether, poly(2,6-diethyl-1,4-phenylene)ether, poly(2,6-dipropyl-1,4-phenylene)ether, poly(2-methyl6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, poly(2,3,6-trimethyl-1,4-phenylene)ether, poly(2,3,6-triethyl-1,4-phenylene)ether, and copolymers thereof, preferably poly(2,6-dimethyl-1,4-phenylene) or a copolymer thereof.

Based on the content of the base resin, the polyarylene ether may be included in an amount of preferably 26 to 49 % by weight, more preferably 28 to 45 % by weight, still more preferably 30 to 40 % by weight. In this case, heat resistance and mechanical strength may be excellent.

The polyarylene ether copolymer means a polymer prepared by co-polymerizing a major monomer and a comonomer, and as specific example, may be selected from a copolymer of poly(2,6-dimethyl-1,4-phenylene)ether and poly(2,3,6-trimethyl-1,4-phenylene)ether; a copolymer of poly(2,6-dimethyl-1,4-phenylene)ether and poly(2,3,6-triethyl-1,4-phenylene)ether; and combinations thereof. As a preferred example, the polyarylene ether copolymer may be a copolymer of poly(2,6-dimethyl-1,4-phenylene)ether and poly(2,3,6-trimethyl-1,4-phenylene) ether.

The polyarylene ether may have an intrinsic viscosity of preferably 0.2 to 0.8 dl/g, more preferably 0.3 to 0.6 dl/g, still more preferably 0.3 to 0.4 dl/g as measured at 25 °C in chloroform as a solvent. Within this range, heat resistance, processability, and appearance may be excellent while maintaining mechanical properties at a high level.

The polyarylene ether is preferably in a powder or flake form. In particular, when the polyarylene ether is in a flake form, mechanical properties, such as impact strength and flexural strength, processability, and appearance may be excellent.

In this description, the depth and length of the flake may be measured by microscopic analysis.

## (B) First additives

The first additives of the present invention may include the first polar polyolefin resin and multifunctional reactive agents capable of providing a portion of the continuous phase (sea) of the sea-island structure in combination with the base resin and the block copolymerization impact modifier capable of providing the additional dispersed phase (sub island) within the dispersed phase (island) of the sea-island structure.

For example, based on 100 parts by weight of the base resin, the first additives may be included in an amount of 8 to 20 parts by weight, more preferably 8 to 18 parts by weight, still more preferably 9 to 18 parts by weight, still more preferably 10 to 17.5 parts by weight. Within this range, in addition to mechanical properties and conductivity, appearance and moisture stability may be excellent.

## First polar polyolefin resin

The first polar polyolefin resin of the present invention may preferably be a copolymer obtained by grafting an ethylenically unsaturated compound containing a hydroxy group, an ethylenically unsaturated compound containing an amino group, an ethylenically unsaturated compound containing an epoxy group, an aromatic vinyl compound, an unsaturated carboxylic acid or a derivative thereof, a vinyl ester compound, or vinyl chloride onto a polyolefin resin. Specifically, the first polar polyolefin resin may be a copolymer obtained by grafting an unsaturated carboxylic acid or an anhydride monomer or derivative thereof onto a polyolefin resin. In this case, mechanical properties, such as impact strength, and conductivity may be excellent.

Examples of the unsaturated carboxylic acid may include acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2.2.1]hept-2-ene-5,6-dicarboxylic acid. In addition, examples of the anhydride monomer or derivative thereof may include malenylchloride, malenylimide, maleic anhydride, itaconic anhydride, citraconic anhydride, tetrahydrophthalic anhydride, bicyclo[2.2.1]hept-2-ene-5,6-dicarboxylic acid anhydride, dimethyl malate, monomethyl maleate, diethyl malate, diethyl fumarate, dimethyl itaconate, diethyl citraconate, dimethyltetrahydrophthalate, dimethyl bicyclo[2.2.1]hept-2-ene-5,6-dicarboxylate, hydroxyethyl (meth)acrylate, hydroxypropyl (meth)acrylate, glycidyl (meth)acrylate, aminoethyl methacrylate, and aminopropyl methacrylate. Specifically, the modified polyolefin resin may be a copolymer obtained by grafting acrylic acid or maleic anhydride onto a polyolefin resin.

For example, based on 100 % by weight in total of total components constituting the polar polyolefin resin, the unsaturated carboxylic acid may be included in an amount of 0.1 to 5 % by weight, specifically 0.5 to 5 % by weight, preferably 0.8 to 3 % by weight. In this case, mechanical properties, such as impact strength, and conductivity may be excellent.

Based on 100 parts by weight of the base resin, the first polar polyolefin resin may be included in an amount of preferably 1 to 3 parts by weight, more preferably 1.2 to 2.8 parts by weight, still more preferably 1.5 to 2.5 parts by weight. Within this range, in addition to mechanical properties and conductivity, appearance and moisture stability may be excellent.

The first polar polyolefin resin may be prepared using methods commonly used in the art to which the present invention pertains, without particular limitation, As a specific example, the first polar polyolefin resin may be obtained by performing graft polymerization by heating a monomer such as the unsaturated carboxylic acid in the presence or absence of a radical initiator. In particular, to increase the efficiency of the graft polymerization reaction, it is preferable to perform the graft polymerization in the presence of a radical initiator.

**Block copolymerization impact modifier**

The block copolymerization impact modifier of the present invention is preferably styrene-based rubber. As a specific example, the block copolymerization impact modifier may include one or more selected from styrene-butadiene-styrene (SBS) copolymers, styrene-ethylene-butylene-styrene (SEBS) copolymers, styrene-butadiene (SB) copolymers, styrene-isoprene (SI) copolymers, styrene-isoprene-styrene (SIS) copolymers, alpha-methylstyrene-butadiene copolymers, styrene-ethylene-propylene copolymers, styrene-ethylene-propylene-styrene copolymers, styrene-(ethylene-butylene/styrene copolymer)-styrene copolymers, and modified polymers thereof. As a preferred example, the block copolymerization impact modifier may include one or more selected from the group consisting of styrene-butadiene-styrene (SBS) copolymers, styrene-ethylene-butylene-styrene (SEBS) copolymers, and maleic anhydride-modified styrene-ethylene-butylene-styrene copolymers, as a more preferred example, a styrene-butadiene-styrene (SBS) copolymer. In this case, mechanical properties, such as impact strength, and conductivity may be excellent.

Based on 100 parts by weight of the base resin, the block copolymerization impact modifier may be included in an amount of preferably 3 to 11 parts by weight, more preferably 4 to 10.5 parts by weight, still more preferably 5 to 10 parts by weight. Within this range, in addition to mechanical properties and conductivity, appearance and moisture stability may be excellent.

In the block copolymerization impact modifier, the content of an aromatic vinyl compound-derived structural unit may be preferably 20 to 40 % by weight, more preferably 20 to 30 % by weight. Within this range, mechanical properties may be excellent.

In the block copolymerization impact modifier, the content of rubber may be preferably 60 to 80 % by weight, more preferably 70 to 80 % by weight. Within this range, mechanical properties may be excellent.

The block copolymerization impact modifier may have an average particle diameter of preferably 0.5 $\mu$m or less, more preferably 0.3 $\mu$m or less and may be dispersed in the sea-island structure to constitute the additional dispersed phase (sub island) within the dispersed phase (island). Within this range, heat resistance and impact strength may be excellent.

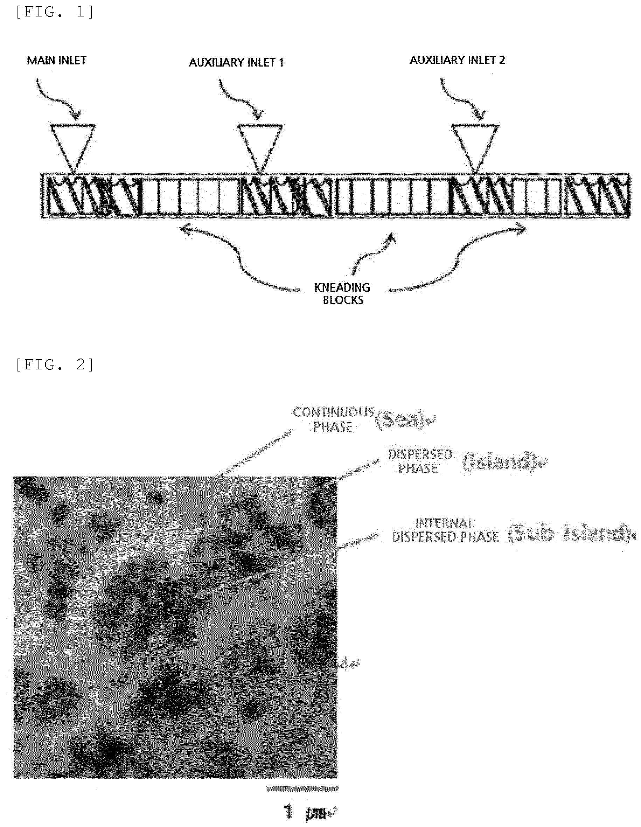

Here, unless otherwise specified, the additional dispersed phase may refer to an additional dispersed phase (sub island in island, corresponding to "Sub Island" shown in FIG. 2) provided inside the dispersed phase.

In the present disclosure, the average particle diameter may be measured by dynamic light scattering, and specifically, may be measured as an intensity value using a Nicomp 380 particle size analyzer (manufacturer: PSS) in a Gaussian mode. As a specific measurement example, a sample may be prepared by diluting 0.1 g of latex (solids content: 35 to 50 wt%) 1,000 to 5,000-fold with distilled water, and average particle diameter may be measured using flow cells in an auto-dilution manner and in a mode of dynamic light scattering/intensity 300 kHz/intensity-weight Gaussian analysis. At this time, temperature may be set to 23 °C, measurement wavelength may be set to 632.8 nm, and channel width may be set to 10 $\mu$sec.

As a method of preparing the block copolymerization impact modifier, methods commonly used in the art to which the present invention pertains may be used without particular limitation. As a specific example, emulsion polymerization, suspension polymerization, solution polymerization, or bulk polymerization may be used. As a preferred example, emulsion polymerization or bulk polymerization may be used.

**Multifunctional reactive agents**

The multifunctional reactive agents of the present invention may preferably include two or more functional groups selected from the group consisting of a carboxyl group, an amine group, a hydroxyl group, a maleic acid group, and an epoxy group. As a specific example, the multifunctional reactive agents may include 2 to 5 functional groups selected therefrom. In this case, conductivity and moisture stability may be excellent.

In the present disclosure, as the maleic acid group, a substituent recognized as a maleic acid group in the art to which the present invention pertains may be used without particular limitation. As a specific example, the maleic acid group means a functional group derived from maleic acid or maleic anhydride.

As a specific example, the multifunctional reactive agents may be polymers functionalized by reacting a polyphenylene ether and a reactive monomer, such as an unsaturated carboxylic acid or anhydride thereof.

For example, the reactive monomer may include one or more selected from the group consisting of citric acid, maleic acid, itaconic acid, fumaric acid, acrylic acid, and anhydrides thereof.

In the present invention, two or more types of multifunctional reactive agents may be used, and the term "two or more types" means two or more multifunctional reactive agents having different types or structures.

As a specific example, the multifunctional reactive agents preferably consist of a combination of a high-molecular-weight multifunctional reactive agent having a number average molecular weight of 150,000 g/mol or more and a low-molecular-weight multifunctional reactive agent having a number average molecular weight of 10,000 g/mol or less.

Based on 100 parts by weight of the base resin, the multifunctional reactive agents may be included in an amount of preferably 2 to 12 parts by weight, more preferably 2.5 to 12 parts by weight, still more preferably 3 to 12 parts by weight. Within this range, appearance, conductivity, and moisture stability may be greatly improved without deterioration in the intrinsic mechanical properties of a resin.

The multifunctional reactive agents of the present invention may preferably include one or more selected from a polyphenylene oxide resin functionalized with a carboxylic acid, maleic acid, or maleic anhydride and a bisphenol A-type epoxy resin having an epoxy functional group at end thereof. In this case, conductivity and moisture stability may be excellent.

Based on 100 parts by weight in total of the base resin, the polyphenylene oxide resin functionalized with a carboxylic acid, maleic acid, or maleic anhydride may be included in an amount of preferably 1 to 10 parts by weight, more preferably 2 to 8 parts by weight, still more preferably 3 to 7 parts by weight. Within this range, appearance and moisture stability may be greatly improved without deterioration in the intrinsic mechanical properties of a resin.

Based on 100 parts by weight in total of the base resin, the bisphenol A-type epoxy resin may be included in an amount of preferably 0.5 to 8 parts by weight, more preferably 1 to 7 parts by weight, still more preferably 1 to 5 parts by weight. Within this range, appearance, conductivity, and moisture stability may be greatly improved without deterioration in the intrinsic mechanical properties of a resin.

The bisphenol A-type epoxy resin may preferably have an average epoxy equivalent of 2,000 to 6,000 and/or a number average molecular weight of 3,000 to 10,000 g/mol and/or a glass transition temperature of 50 to 120 °C, and/or may preferably be a solid at room temperature (22 to 25 °C). Within this range, appearance and moisture stability may be greatly improved without deterioration in the intrinsic mechanical properties of a resin.

In the present disclosure, number average molecular weight (Mn) may be measured by gel permeation chromatography (GPC, Waters Breeze).

In the present disclosure, glass transition temperature (Tg) may be measured using a Pyris 6 DSC (Perkin Elmer Co.).

In the present disclosure, the average epoxy equivalent is average molecular weight per one epoxy group.

Based on 100 parts by weight in total of the base resin, the polyphenylene oxide resin functionalized with a carboxylic acid, maleic acid, or maleic anhydride may be included in an amount of preferably 0.5 to 8 parts by weight, more preferably 1 to 7 parts by weight, still more preferably 2 to 7 parts by weight. Within this range, by reinforcing a continuous phase (sea) within a sea-island structure, heat resistance and moisture stability may be greatly improved.

In the present disclosure, within the scope of the present invention, the multifunctional reactive agents may be prepared by a method commonly practiced in the art to which the present invention pertains, or commercially available products may be used as the multifunctional reactive agents, without particular limitation.

## (C) Second additives

The second additives of the present invention may include the second polar polyolefin resin and second polyester capable of reinforcing the continuous phase (sea) of the above-described sea-island structure and carbon nanotubes and carbon nanoplates capable of providing the additional dispersed phase (sub island).

Based on 100 parts by weight of the base resin, the second additives may be included in an amount of preferably 4 to 14 parts by weight, more preferably 4 to 12 parts by weight, still more preferably 4 to 10 parts by weight, still more preferably 5 to 9 parts by weight. Within this range, in addition to mechanical properties and conductivity, appearance and moisture stability may be excellent.

The second additives may be prepared as a masterbatch and then added. In this case, the additional dispersed phase may be provided within the continuous phase while reinforcing the continuous phase.

For example, the second additives may be prepared using a method including a step of performing kneading and extrusion using an extruder equipped with 9 or more kneading blocks, preferably 10 or more kneading blocks, more preferably 12 or more kneading blocks, as a preferred example, 9 to 18 kneading blocks, as a more preferred example, 10 to 18 kneading blocks, as a still more preferred example, 12 to 16 kneading blocks. In this case, it may be effective to arrange the kneading blocks in the order of forward kneading blocks, neutral kneading blocks, and backward kneading blocks with respect to a resin flow direction. Depending on combination manners, a continuous or separate block combination may be used. In this case, the dispersibility of the components and the compatibility of the composition may be further improved, thereby providing a high-quality masterbatch.

## Second polar polyolefin resin

The second polar polyolefin resin of the present invention may be selected and used from the types described above for the first polar polyolefin resin of the component (B) .

Based on 100 % by weight of a basic resin consisting of the second polar polyolefin resin and a second polyester to be described later, the second polar polyolefin resin may be included in an amount of preferably 70 to 100 % by weight, more preferably 75 to 100 % by weight, still more preferably 80 to 100 % by weight. Within this range, by reinforcing the continuous phase (sea) of the sea-island structure, the conductivity, mechanical properties, and moisture stability of the base resin may be greatly improved.

## Second polyester

The second polyester of the present invention may be selected and used from the types described above for the first polyester of the component (A).

Based on 100 % by weight of the basic resin consisting of the above-described second polar polyolefin resin and the second polyester, the second polyester may be included in an amount of preferably 0 to 30 % by weight, more preferably 0 to 25 % by weight, still more preferably 1 to 20 % by weight. Within this range, by reinforcing the continuous phase (sea) of the sea-island structure, the conductivity, mechanical properties, and moisture stability of the base resin may be improved.

## Carbon nanotubes

The carbon nanotubes of the present invention may have a BET surface area of preferably 180 to 600 $m^2/g$, more preferably 180 to 400 $m^2/g$, still more preferably 180 to 300 $m^2/g$, still more preferably 200 to 300 $m^2/g$. Within this range, processability and conductivity may be greatly improved.

In the present disclosure, the BET surface area may be measured using a nitrogen adsorption method. As a specific example, the BET surface area may be measured by a BET 6-point method according to a nitrogen gas adsorption/distribution method using pore distribution measuring instrument (Porosimetry analyzer, Belsorp-II mini, Bell Japan Inc.). As another example, the BET surface area may be measured by a Brunauer, Emmett, or Teller method according to ASTM 6556.

For example, based on 100 parts by weight of the basic resin consisting of the second polar polyolefin resin and the second polyester, the carbon nanotubes may be included in an amount of 10 to 40 parts by weight, preferably 10 to 30 parts by weight, more preferably 20 to 30 parts by weight, still more preferably 20 to 25 parts by weight. Within this range, mechanical properties, processability, conductivity, appearance, and heat resistance may be excellent.

For example, the carbon nanotubes may include one or more selected from the group consisting of single-walled carbon nanotubes (SWCNTs), double-walled carbon nanotubes (DWCNTs), and multi-walled carbon nanotubes (MWCNTs).

For example, the carbon nanotubes may be bundle-type (rope-type) nanotubes or non-bundle-type (entangle-type) nanotubes.

In the present disclosure, as the "bundle-type" and the "non-bundle-type", a "bundle-type" and a "non-bundle-type" commonly approved or defined in the art to which the present invention pertains may be used without particular limitation.

The carbon nanotubes may have an average diameter of preferably 5 to 30 nm, more preferably 7 to 20 nm, still more preferably 10 to 15 nm. Within this range, conductivity and appearance may be greatly improved.

In the present disclosure, a measurement method commonly practiced in the art to which the present invention pertains may be used to measure the average diameter of the carbon nanotubes without particular limitation. As a specific example, the average diameter of the carbon nanotubes may be measured by electron microscopy analysis.

Preferably, the carbon nanotubes may be provided in a fibrous form. In this case, as shown in FIG. 2, the carbon nanotubes having a size of 1.0 $\mu$m or less may be dispersed in the sea-island structure, and thus may constitute the additional dispersed phase within the continuous phase. Here, the additional dispersed phase is an additional dispersed phase (sub island in sea, not shown in FIG. 2) dispersed within the continuous phase and is different from the additional dispersed phase (sub island in island, "Sub Island" shown in FIG. 2) provided by the above-described block copolymerization impact modifier.

## Carbon nanoplates

The carbon nanoplates of the present invention are preferably plate-shaped carbon nanoplates, more preferably plate-shaped carbon nanoplates having an average thickness of 5 to 50 nm. Within this range, due to a mutual dispersion effect with the above-described carbon nanotubes, the conductivity, mechanical properties, heat resistance, and moisture stability of the base resin may be greatly improved.

The carbon nanoplates may preferably include one or more selected from exfoliated graphite, graphene nanoplates, and exfoliated expanded graphite, more preferably exfoliated graphite. Within this range, due to a mutual dispersion effect with the above-described carbon nanotubes, the conductivity, mechanical properties, heat resistance, and moisture stability of the base resin may be greatly improved.

For example, the exfoliated graphite may be graphite obtained by processing layered graphite to have a thickness of 5 to 50 nm using a chemical and/or physical exfoliation method.

Exfoliation methods commonly practiced in the art to which the present invention pertains may be used as the method of chemically and/or physically exfoliating layered graphite, without particular limitation. As a specific example, graphite may be modified and expanded using Brodie's method, Hummers' method, or the like, and then may be exfoliated by ultrasonic crushing, rapid heating, or the like.

For example, based on 100 parts by weight of the basic resin consisting of the second polar polyolefin resin and the second polyester, the carbon nanoplates may be included in an amount of preferably 1 to 10 parts by weight, more preferably 2 to 8 parts by weight, still more preferably 3 to 8 parts by weight, still more preferably 3 to 7 parts by weight. Within this range, due to a mutual dispersion effect with the above-described carbon nanotubes, the conductivity, mechanical properties, and moisture stability of the base resin may be greatly improved.

In addition, based on 100 parts by weight of the basic resin consisting of the second polar polyolefin resin and the second polyester, the carbon nanoplates may further be included in an amount of preferably 0.4 to 1.4 parts by weight, more preferably 0.4 to 1.2 parts by weight, still more preferably 0.5 to 1 part by weight. Within this range, due to a mutual dispersion effect with the above-described carbon nanotubes, the conductivity, mechanical properties, and moisture stability of the base resin may be further improved.

The carbon nanoplates may have an average thickness of preferably 5 to 40 nm, more preferably 10 to 40 nm. Within this range, due to a mutual dispersion effect with the above-described carbon nanotubes, conductivity and appearance may be improved at the same time.

In the present disclosure, measurement methods commonly used in the art to which the present invention pertains may be used to measure the average thickness of the carbon nanoplates, without particular limitation. As a specific example, electron microscopy analysis may be used.

Preferably, the carbon nanoplates may be provided in a plate form. In this case, as shown in FIG. 2, the carbon nanoplates having a size of 1.0 $\mu$m or less may be dispersed in the sea-island structure, and thus may constitute the additional dispersed phase within the continuous phase in combination with the carbon nanotubes. Here, the additional dispersed phase is an additional dispersed phase (sub island in sea) dispersed within the continuous phase and is different from the additional dispersed phase (sub island in island) provided by the above-described block copolymerization impact modifier.

## Conductive resin composition

For example, in the conductive resin composition of the present invention, the second additives may be prepared as a masterbatch, and the sea-island structure that provides the continuous phase (sea), the dispersed phase (island), and the additional dispersed phase (sub island) within the continuous phase may be provided.

The continuous phase may consist of the first polyester of the base resin (A), the first polar polyolefin resin and multifunctional reactive agents of the first additives (B), and the second polar polyolefin resin of the second additives (C), the dispersed phase may consist of the polyarylene ether of the base resin (A), and the additional dispersed phase may consist of the block copolymerization impact modifier of the first additives (B) and the carbon nanotubes and carbon nanoplates of the second additives (C). In this case, due to excellent appearance, rigidity, conductivity, moisture stability, and heat resistance, the influence of moisture and heat when exposed to external environments may be minimized, and thus the composition of the present invention may be used to manufacture exterior parts replacing metal parts used in automobiles.

The conductive resin composition of the present invention may have a heat deflection temperature of preferably 170 °C or higher, more preferably 170 to 200 °C, as a preferred example, 170 to 195 °C, as a more preferred example, 180 to 190 °C. Within this range, physical property balance, moisture stability, conductivity, and appearance may be excellent.

The conductive resin composition may have a moisture absorption rate of preferably 0.1 % or less, 0.094 % or less, 0.93 % or less or 0.092 % or less, as a specific example, 0.05 to 0.094 %, as a preferred example, 0.06 to 0.092 %, as a more preferred example, 0.06 to 0.09 %. Within this range, physical property balance, heat resistance, conductivity, and appearance may be excellent.

The moisture absorption rate is measured by the method used in Examples described later. For example, the moisture absorption rate may be calculated by Equation 1 below.

[Equation 1]

$$\text{Moisture absorption rate (\%)} = (\text{Increased weight after immersion} / \text{Weight before immersion}) \times 100$$

The conductive resin composition may have a surface resistance of preferably $10^{\wedge}7$ ohm/sq or less, as a specific example, $10^{\wedge}7$ to $10^{\wedge}8$ ohm/sq. Within this range, physical property balance, heat resistance, moisture stability, and appearance may be excellent.

The conductive resin composition preferably has a tensile strength of 55 MPa or more, as a specific example, 55 to 70 MPa, as a preferred example, 55 to 65 MPa, as measured under conditions of a specimen thickness of 3.2 mm and a measurement speed of 5 mm/min according to ASTM D638. Within this range, physical property balance, heat resistance, conductivity, moisture stability, and appearance may be excellent.

The conductive resin composition has a notched Izod impact strength of preferably 100 J/m or more, more preferably 110 J/m or more, as a specific example, 110 to 180 J/m, as a preferred example, 110 to 175 J/m, as measured under conditions of a specimen thickness of 4 mm and a measurement temperature of 25 °C according to ISO 180A. Within this range, physical property balance, heat resistance, conductivity, moisture stability, and appearance may be excellent.

For example, as confirmed in Examples and Comparative Examples below, the conductive resin composition of the present invention includes 100 parts by weight of the base resin including the polyester and the polyarylene ether; 1 to 20 parts by weight of the block copolymerization impact modifier; 1 to 20 parts by weight of the multifunctional reactive agents; and 0.1 to 10 parts by weight of one or more selected from carbon nanotubes and carbon nanoplates and has a surface resistance of $10^{\wedge}8$ Ohm/sq or less. In this case, physical property balance, heat resistance, conductivity, moisture stability, and appearance may be excellent.

At this time, the polyester includes the aforementioned first polyester and second polyester.

When polyamides such as nylon 6 and nylon 66 were included, the effect of providing an alloy having stabilized moisture properties was absent or insignificant (See Comparative Example 5 below).

## Method of preparing conductive resin composition

The method of preparing the conductive resin composition according to the present invention preferably includes a step of kneading and extruding 100 parts by weight of a base resin (A) including a first polyester and a polyarylene ether; 8 to 20 parts by weight of two or more first additives (B) selected from a first polar polyolefin resin, a block copolymerization impact modifier, and multifunctional reactive agents; and 4 to 14 parts by weight of three or more second additives (C) selected from a second polar polyolefin resin, a second polyester, carbon nanotubes, and carbon nanoplates using an extruder equipped with 9 or more kneading blocks to provide a sea-island structure that provides a continuous phase, a dispersed phase, and an additional dispersed phase within the continuous phase.

The sea-island structure that provides the continuous phase (sea), the dispersed phase (island), and the additional dispersed phase (sub island) is provided.

The continuous phase (sea) consists of the first polyester of the base resin (A), the first polar polyolefin resin and multifunctional reactive agents of the first additives (B), and the second polar polyolefin resin of the second additives (C), the dispersed phase (island) consists of the polyarylene ether of the base resin (A), and the additional dispersed phase (sub island) consists of the block copolymerization impact modifier of the first additives (B) and the carbon nanotubes and carbon nanoplates of the second additives (C). In this case, in addition to appearance, rigidity, and conductivity, moisture stability and heat resistance may be excellent, thereby minimizing the influence of moisture and heat when exposed to external environments. Thus, there is an advantage of providing a conductive resin composition suitable for exterior parts replacing metal parts used in automobiles.

For example, the kneading and extrusion may be performed at a barrel temperature of 230 to 310 °C, preferably 240 to 300 °C, more preferably 250 to 290 °C, still more preferably 250 to 280 °C. In this case, throughput per unit time may be high, melt-kneading may be sufficiently performed, and thermal decomposition of resin components may be prevented.

For example, the kneading and extrusion may be performed at a screw rotation rate of 100 to 500 rpm, preferably 150 to 400 rpm, more preferably 100 to 350 rpm, still more preferably 150 to 320 rpm, still more preferably 200 to 310 rpm. Within this range, throughput per unit time may be high, process efficiency may be excellent, and excessive cutting of carbon nanotubes and carbon nanoplates may be prevented, thereby improving the conductivity of a final product.

The conductive resin composition obtained by the kneading and extrusion may be provided in a pellet form.

A method of manufacturing a molded article according to the present invention preferably includes a step of kneading and extruding 100 parts by weight of a base resin (A) including a first polyester and a polyarylene ether; 8 to 20 parts by weight of two or more first additives (B) selected from a first polar polyolefin resin, a block copolymerization impact modifier, and multifunctional reactive agents; 4 to 14 parts by weight of three or more second additives (C) selected from a second polar polyolefin resin, a second polyester, carbon nanotubes, and carbon nanoplates to prepare conductive resin composition pellets and a step of injecting the prepared pellets to manufacture a molded article. In this case, the second additives are prepared as a masterbatch and added. In this case, the kneading and extrusion are performed using an extruder equipped with 9 or more kneading blocks. In this case, in addition to appearance, rigidity, and conductivity, moisture stability and heat resistance may be excellent, thereby providing a molded article in which the influence of moisture and heat when exposed to external environments is minimized.

The injection may be performed using a method and conditions commonly used in the art to which the present invention pertains, without particular limitation.

In describing the conductive resin composition, the molded article, the method of preparing the conductive resin composition, and the method of manufacturing the molded article, unless specified otherwise, other conditions (for example, the configuration and specifications of an extruder and an injection machine, extrusion and injection conditions, additives, and the like) may be appropriately selected and implemented as needed when the conditions are within the range commonly practiced in the art, without particular limitation.

The present invention will be described with reference to the following drawings.

FIG. 1 below schematically illustrates an extruder equipped with 9 or more kneading blocks for preparing the conductive resin composition of the present invention.

The type of extruder is not particularly limited, and an extruder commonly used in the art may be appropriately selected and used. For example, a single-screw extruder equipped with one screw or a multi-screw extruder equipped with a plurality of screws may be used. Considering uniform kneading of materials, ease of processing, and economic efficiency, a twin-screw extruder equipped with two screws is preferably used.

The extruder includes a raw material feeder for feeding materials into a barrel, a screw for conveying and kneading the fed materials, and a die for extruding the kneaded materials. In this case, the screw consists of a plurality of screw elements for various functions.

In the extruder, one or more raw material feeders may be provided, and two or more raw material feeders may be provided, as needed. In addition, a main inlet may be provided, and two or more auxiliary inlets may be optionally provided.

As a specific example, all components may be fed into the main inlet batchwise. As another example, the base resin and the first additives may be fed into the main inlet, and the second additives may be fed into the auxiliary inlets.

The kneading blocks of the present invention correspond to the screw elements. Specifically, each kneading block consists of a plurality of discs, preferably 3 to 7 discs, 5 to 7 discs, 3 to 5 discs, or 4 to 5 discs, and has a polygonal cross section or an elliptical cross section. The kneading blocks are arranged continuously in a direction in which materials are conveyed. In addition, in the kneading block, the phase angle of the discs (indicating the travel angle between discs) is preferably 45 to 90°.

In addition, the kneading block includes a forward kneading block capable of conveying, distributing, and mixing materials, a neutral kneading block capable of distributing and mixing materials without conveying the materials, and a backward kneading block capable of conveying materials in a direction opposite to the conveying direction.

For example, the conductive resin composition according to the present invention may be prepared using a method including a step of performing kneading and extrusion using an extruder equipped with 9 or more, preferably 10 or more, more preferably 12 or more kneading blocks, as a preferred example, 9 to 18 kneading blocks, as a more preferred example, 10 to 18 kneading blocks, as a still more preferred example, 12 to 16 kneading blocks. In this case, it may be effective to arrange the kneading blocks in the order of forward kneading blocks, neutral kneading blocks, and backward kneading blocks with respect to a resin flow direction. Depending on combination manners, a continuous or separate block combination may be used. In this case, the dispersibility of a conductive filler and compatibility between compositions may be further improved, and thus a high-quality conductive resin composition may be provided.

9 or more kneading blocks may be arranged continuously, or may be arranged discontinuously between screws. As a specific example, 3 to 6 kneading blocks may be provided continuously between the main inlet and the auxiliary inlet 1, 3 to 8 kneading blocks may be provided continuously between the auxiliary inlet 1 and the auxiliary inlet 2, and 2 to 5 kneading blocks may be provided between the auxiliary inlet 2 and an outlet (not shown). With this configuration, local heat generation during melt-kneading may be controlled to prevent thermal deformation of raw materials. In addition, excessive cutting of nanoscale components may be prevented, thereby preventing deterioration in conductivity and physical properties.

FIG. 2 below shows the sea-island structure provided by the conductive resin composition of the present invention.

Referring to FIG. 2, the continuous phase (sea) of the sea-island structure consists of the first polyester of the base resin (A), the first polar polyolefin resin and multifunctional reactive agents of the first additives (B), and the second polar polyolefin resin of the second additives (C), the dispersed phase (island) consists of the polyarylene ether of the base resin (A), and the additional dispersed phase (sub island) of the sea-island structure consists of the block copolymerization impact modifier of the first additives (B) and the carbon nanotubes and carbon nanoplates of the second additives (C).

Specifically, the block copolymerization impact modifier may form a fine internal dispersed phase (sub island in island) within the dispersed phase of the sea-island structure.

In addition, the carbon nanotubes and the carbon nanoplates may selectively form a fine internal dispersed phase (sub island in sea) in the continuous phase of the sea-island structure.

When the carbon nanotubes are in a fibrous form and the carbon nanoplates are in a plate form, the aforementioned dispersing effect may be further increased.

In the present disclosure, the term "sea-island structure" means a dispersion structure composed of a continuous phase (sea) and a dispersed phase (island) known in the art.

For example, the sea-island structure may be verified by observing the formation state of the sea-island structure, the uniformity of the shape, and the division state, etc. using an optical microscope with a magnification of 200 times.

The sea-island structure provided by the conductive resin composition of the present invention has a basic structure consisting of the continuous phase (sea) and the dispersed phase (island) described above, and optionally has a structure in which the additional dispersed phase (sub island in sea) is dispersed in the continuous phase (sea) and the additional dispersed phase (sub island in island) is dispersed in the dispersed phase (island).

## Molded article

An automotive molded article manufactured using the above-described conductive resin composition has excellent dimensional stability when exposed to moisture, and thus dimensional change due to exposure to external environments may be minimized.

The molded article may be an automotive electrostatic painting exterior part.

For example, the automotive electrostatic painting exterior part may be an exterior panel, a door, a fuel inlet, a charging port, or the like.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Components used in Examples and Comparative Examples below are as follows.

* First polyester: Polybutylene terephthalate resin (LG Chemical Co., GP2000, M.I. (250 °C, 2.16 kg): 30 g/10 min) was used as the first polyester.

* Second polyester: Polybutylene terephthalate resin (LG Chemical Co., GP2000, M.I. (250 °C, 2.16 kg): 30 g/10 min) was used as the second polyester.

* Polyarylene ether: Polyphenylene oxide resin (PPO) (Bluestar Co., 040) was used as the polyarylene ether.

* Polyamide: A polyamide (Invista Co., 3602 PA66) was used.

* First polar polyolefin-based resin: An ethylene-octene copolymer (density: 0.87 g/cm$^2$, LG Chemical Co., LC170) modified with 1.2 % by weight of maleic acid was used as the first polar polyolefin-based resin.

* Second polar polyolefin-based resin: An ethylene-octene copolymer (density: 0.87 g/cm$^2$, LG Chemical Co., LC170) modified with 1.2 % by weight of maleic acid was used as the second polar polyolefin-based resin.

* Block copolymerization impact modifier: Styrene-based rubber (Kraton Co., SEBS 1651, styrene: 32 wt%, butadiene rubber: 68 wt%) was used as the block copolymerization impact modifier.

* Multifunctional reactive agent 1: A reactive epoxy YD019 product (epoxy equivalent: 2,000 to 3,000, Kukdo Chemical Co.) was used as the multifunctional reactive agent 1.

* Multifunctional reactive agent 2: A ZA product (G Farm Co.) having a polyphenylene oxide (mah-PPO) structure modified with maleic anhydride was used as the multifunctional reactive agent 2.

* Carbon nanotubes: Carbon nanotubes in fibrous form (BET surface area: 200 to 300 m$^2$/g, LG Chemical Co., CP1002M) were used.

* Carbon nanoplates: Layered exfoliation products having an average thickness of 5 to 50 nm were used as the carbon nanoplates.

Preparation Examples 1 to 3: Preparation of second additives

<Preparation Example 1>

Using a twin-screw extruder (SM Co., T40) equipped with 10 kneading blocks, 100 parts by weight of the second polar polyolefin-based resin, 25 parts by weight of the carbon nanotubes, and 5 parts by weight of the plate-shaped carbon nanoplates were melt-kneaded and then extruded to prepare second additives in pellet form.
At this time, the cylinder temperature of the twin-screw extruder was set to 250 °C, and the screw rotation rate thereof was set to 300 rpm.
The prepared pellets were described as "PMB 1-25" in Table 1 below.

<Preparation Example 2>

Using a twin-screw extruder (SM Co., T40) equipped with 10 kneading blocks, 100 parts by weight of the basic resin consisting of 80 % by weight of the second polar polyolefin-based resin and 20 % by weight of the second polyester, 25 parts by weight of the carbon nanotubes, and 5 parts by weight of the plate-shaped carbon nanoplates were melt-kneaded and extruded to prepare second additives in pellet form.
At this time, the cylinder temperature of the twin-screw extruder was set to 250 °C, and the screw rotation rate thereof was set to 300 rpm.
The prepared pellets were described as "PMB 2-25" in Table 1 below.

<Preparation Example 3>

Using a twin-screw extruder (SM Co., T40) equipped with 10 kneading blocks, 100 parts by weight of the second polar polyolefin-based resin, 20 parts by weight of the carbon nanotubes, and 5 parts by weight of the plate-shaped carbon nanoplates were melt-kneaded and extruded to prepare second additives in pellet form.
At this time, the cylinder temperature of the twin-screw extruder was set to 250 °C, and the screw rotation rate thereof was set to 300 rpm.
The prepared pellets were described as "PMB 3-25" in Table 1 below.

Examples 1 to 5 and Comparative Examples 1 to 5

According to the contents shown in Tables 1 and 2, the components shown Tables 1 and 2 were melt-kneaded and extruded at a temperature of 250 to 310 °C and a rotation rate (rpm) of 300 revolutions/min using a twin-screw extruder (T40, SM Co.) equipped with 10 mixing blocks to prepare pellets, and the prepared pellets were injected using an injection machine (80 tons, Engel Co.) to prepare specimens for evaluation.
Components other than the first polyester were fed into the main inlet of the twin-screw extruder, the first polyester was fed into the auxiliary inlet 1, and the pellets prepared in Preparation Examples were fed into the auxiliary inlet 2.

[Test Examples]

The properties of specimens prepared in Examples 1 to 5 and Comparative Examples 1 to 5 were measured according to the following methods, and the results are shown in Tables 1 and 2 below.

  * Tensile strength (MPa): Using a specimen having a thickness of 3.2 mm, tensile strength was measured at a measurement rate of 5 mm/min according to ASTM D638.
  * Impact strength (J/m) : A specimen having a thickness of 4 mm was notched, and the notched Izod impact strength thereof was measured at a room temperature (23 °C) according to ISO 180A.
  * Heat deflection temperature (°C): The heat deflection temperature of a specimen having a thickness of 4 mm was measured under a stress of 0.45 MPa according to ISO 75-2.
  * Surface resistance (Ohm/sq): The surface resistance of an injection specimen was measured using a PRS-801 (Prostat Co.).
  * Surface quality (appearance): The appearance of an injection specimen was evaluated by the naked eye as follows: ◎: Excellent both in moldability and appearance, O: Good both in moldability and appearance, △: Good appearance (Pinholes were rarely observed), X: Deterioration in appearance (Pinholes were observed), and XX: Poor appearance (Pinholes and flow marks were observed).
  * Moisture absorption rate (%): A flat specimen having a size of 100 mm × 100 mm × 3 mm was prepared by performing injection using an injection machine (80 tons, Engel Co.). The specimen was immersed in distilled water at 23 °C for 48 hours, and the increased weight thereof was measured. Then, the moisture absorption rate was calculated by Equation 1 below.

[Equation 1]

Moisture absorption rate (%) = (Increased weight after immersion / Weight before immersion) × 100

[Table 1]

| Classification | Example 1 | Example 2 | Example 3 | Example 4 | Example 5 |
|---|---|---|---|---|---|
| First polyester | 60 | 60 | 70 | 70 | 70 |
| Polyarylene ether | 40 | 40 | 30 | 30 | 30 |
| Polyamide | - | - | - | - | - |
| First polar polyolefin-based resin | - | 2 | - | 2 | - |
| Block copolymerization impact modifier | 5 | 5 | 7 | 7 | 10 |
| Multifunctional reactive agent 1 | 4 | 3 | - | 5 | 2 |
| Multifunctional reactive agent 2 | 7 | - | 7 | 2 | 5 |
| Carbon nanotubes | - | - | - | - | - |
| Carbon nanoplates | 1 | - | - | 1 | 0.5 |
| PMB 1-25 | 7 | - | 6 | - | - |
| PMB 2-25 | - | 7 | - | 5 | - |
| PMB 3-20 | - | - | - | - | 8 |
| Tensile strength (MPa) | 58 | 56 | 61 | 60 | 64 |
| Impact strength (J/m) | 110 | 130 | 130 | 150 | 175 |
| Heat deflection temperature (°C) | 183 | 180 | 185 | 184 | 182 |
| Surface resistance (Ohm/sq) | $10^8$ | $10^7$ | $10^7$ | $10^8$ | $10^7$ |
| Surface quality (appearance) | ◎ | ◎ | ○ | ◎ | ○ |
| Moisture absorption rate (%) | 0.06 | 0.08 | 0.07 | 0.07 | 0.09 |

[Table 2]

| Classification | Comparativ e Example 1 | Comparativ e Example 2 | Comparativ e Example 3 | Comparativ e Example 4 | Comparativ e Example 5 |
|---|---|---|---|---|---|
| First polyester | 80 | 60 | 80 | 30 | - |
| Polyarylene ether | 20 | 40 | 20 | 70 | 40 |
| Polyamide | - | - | - | - | 60 |
| First polar polyolefin-based resin | - | - | - | 5 | 2 |
| Block copolymerizati on impact modifier | 5 | 5 | 11 | - | 5 |

(continued)

| Classification | Comparative Example 1 | Comparative Example 2 | Comparative Example 3 | Comparative Example 4 | Comparative Example 5 |
|---|---|---|---|---|---|
| Multifunctional reactive agent 1 | 11 | - | 7 | 7 | 3 |
| Multifunctional reactive agent 2 | - | - | - | 2 | - |
| Carbon nanotubes | - | 1 | 1 | 3 | - |
| Carbon nanoplates | - | 3 | 1 | 2 | - |
| PMB 1-25 | 8 | - | - | - | - |
| PMB 2-25 | - | - | - | - | 7 |
| PMB 3-20 | - | - | - | - | - |
| Tensile strength (MPa) | 42 | 40 | 50 | 47 | 55 |
| Impact strength (J/m) | 100 | 70 | 90 | 80 | 150 |
| Heat deflection temperature (°C) | 160 | 165 | 164 | 155 | 180 |
| Surface resistance (Ohm/sq) | $10^{12}$ | $10^{11}$ | $10^{13}$ | $10^{8}$ | $10^{8}$ |
| Surface quality (appearance) | X | X | Δ | XX | ○ |
| Moisture absorption rate (%) | 0.09 | 0.08 | 0.08 | 0.05 | 1.20 |

As shown in Tables 1 and 2, compared to the conductive resin compositions (Comparative Examples 1 to 5) out outside the range of the present invention, in the case of the conductive resin compositions (Examples 1 to 5) according to the present invention, mechanical properties, such as tensile strength and impact strength, heat deflection temperature, and surface resistance were greatly improved, and surface quality and moisture absorption rate were excellent.

In addition, in the case of Comparative Example 5 including a polyamide such as nylon 66, compared to Examples 1 to 5, moisture absorption rate was significantly reduced, making it difficult to provide alloys having stabilized moisture characteristics required for automotive electrostatic painting exterior parts.

That is, the conductive resin composition according to one embodiment of the present invention includes the base resin (A) including the first polyester and the polyarylene ether in specific contents (wt%); the two or more first additives (B) selected from the first polar polyolefin resin, the block copolymerization impact modifier, and the multifunctional reactive agents; and the three or more second additives (C) selected from the second polar polyolefin resin, the second polyester, the carbon nanotubes, and the carbon nanoplates, reinforces the continuous phase (sea) of the sea-island structure and the continuous phase in the dispersed phase (island) structure, and provides the additional dispersed phase structure to the continuous phase and the dispersed phase, respectively. Due to these features of the composition, an automotive electrostatic painting exterior part manufactured using the composition has excellent heat resistance, conductive dispersion, and surface quality.

Claims

1.  A conductive resin composition, comprising:

100 parts by weight of a base resin (A) comprising a first polyester and a polyarylene ether;
8 to 20 parts by weight of two or more first additives (B) selected from a first polar polyolefin resin, a block copolymerization impact modifier, and multifunctional reactive agents; and
4 to 14 parts by weight of three or more second additives (C) selected from a second polar polyolefin resin, a second polyester, carbon nanotubes, and carbon nanoplates,

wherein the conductive resin composition provides a sea-island structure that provides a continuous phase (sea), a dispersed phase (island), and an additional dispersed phase (sub island),

wherein the continuous phase (sea) consists of the first polyester of the base resin (A), the first polar polyolefin resin and the multifunctional reactive agents of the first additives (B), and the second polar polyolefin resin of the second additives (C),

the dispersed phase (island) consists of the polyarylene ether of the base resin (A), and

the additional dispersed phase (sub island) consists of the block copolymerization impact modifier of the first additives (B) and the carbon nanotubes and the carbon nanoplates of the second additives (C).

2. The conductive resin composition according to claim 1, wherein the base resin comprises 51 to 74 % by weight of the first polyester and 26 to 49 % by weight of the polyarylene ether.

3. The conductive resin composition according to claim 1, wherein the first polyester is polybutylene terephthalate.

4. The conductive resin composition according to claim 1, wherein the multifunctional reactive agents comprise two or more functional groups selected from the group consisting of a carboxyl group, an amine group, a hydroxyl group, a maleic acid group, and an epoxy group.

5. The conductive resin composition according to claim 1, wherein the multifunctional reactive agents comprise one or more selected from a polyphenylene oxide resin functionalized with a carboxylic acid, maleic acid, or maleic anhydride; and a bisphenol A-type epoxy resin.

6. The conductive resin composition according to claim 1, wherein, based on 100 parts by weight of the base resin (A), the first additives (B) comprise two or more selected from 1 to 3 parts by weight of the first polar polyolefin resin, 3 to 10.4 parts by weight of the block copolymerization impact modifier, and 2 to 15 parts by weight of the multifunctional reactive agents.

7. The conductive resin composition according to claim 1, wherein the second additives (C) are masterbatch obtained by kneading and extruding 100 parts by weight of a basic resin comprising 70 to 100 % by weight of the second polar polyolefin resin and 0 to 30 % by weight of the second polyester, 10 to 40 parts by weight of the carbon nanotubes, and 1 to 10 parts by weight of the carbon nanoplates.

8. The conductive resin composition according to claim 1, wherein the carbon nanotubes have a BET surface area of 180 to 600 $m^2$/g and exist in a fibrous form.

9. The conductive resin composition according to claim 1, wherein the carbon nanoplates have an average thickness of 5 to 50 nm and have a plate shape.

10. The conductive resin composition according to claim 1, wherein, based on 100 parts by weight of the base resin, the carbon nanoplates are further comprised in an amount of 0.4 to 1.4 parts by weight.

11. The conductive resin composition according to claim 1, wherein the conductive resin composition has a moisture absorption rate of 0.094 % or less.

12. The conductive resin composition according to claim 1, wherein the conductive resin composition has a heat deflection temperature of 170 °C or higher and a surface resistance of $10^7$ Ohm/sq or less.

13. A conductive resin composition, comprising:

100 parts by weight of a base resin comprising a polyester and a polyarylene ether;
1 to 20 parts by weight of a block copolymerization impact modifier;
1 to 20 parts by weight of multifunctional reactive agents; and
0.1 to 10 parts by weight of one or more selected from carbon nanotubes and carbon nanoplates,
wherein the conductive resin composition has a surface resistance of $10^8$ Ohm/sq or less.

14. A method of preparing a conductive resin composition, comprising kneading and extruding 100 parts by weight of a base resin (A) comprising a first polyester and a polyarylene ether; 8 to 20 parts by weight of two or more first additives (B) selected from a first polar polyolefin resin, a block copolymerization impact modifier, and multifunctional reactive agents; and 4 to 14 parts by weight of three or more second additives (C) selected from a second polar polyolefin resin, a second polyester, carbon nanotubes, and carbon nanoplates using an extruder equipped with 9 or more kneading blocks to provide a sea-island structure that provides a continuous phase (sea), a dispersed phase (island), and an additional dispersed phase (sub island) within the continuous phase,

wherein the continuous phase (sea) consists of the first polyester of the base resin (A), the first polar polyolefin resin and the multifunctional reactive agents of the first additives (B), and the second polar polyolefin resin of the second additives (C), the dispersed phase (island) consists of the polyarylene ether of the base resin (A), and the additional dispersed phase (sub island) consists of the block copolymerization impact modifier of the first additives (B) and the carbon nanotubes and the carbon nanoplates of the second additives (C).

15. A molded article, comprising the conductive resin composition according to any one of claims 1 to 13.

16. The molded article according to claim 15, wherein the molded article is an automotive electrostatic painting exterior part.

[FIG. 1]

[FIG. 2]

# EP 4 349 912 A1

<table>
<tr><td colspan="2" align="center"><strong>INTERNATIONAL SEARCH REPORT</strong></td><td colspan="2">International application No.<br><br><strong>PCT/KR2023/005518</strong></td></tr>
</table>

**A.    CLASSIFICATION OF SUBJECT MATTER**

**C08L 67/02**(2006.01)i; **C08L 71/12**(2006.01)i; **C08L 25/10**(2006.01)i; **C08L 53/00**(2006.01)i; **C08L 63/00**(2006.01)i; **C08K 7/24**(2006.01)i; **C08K 3/04**(2006.01)i; **C08J 3/22**(2006.01)i

According to International Patent Classification (IPC) or to both national classification and IPC

**B.    FIELDS SEARCHED**

Minimum documentation searched (classification system followed by classification symbols)

C08L 67/02(2006.01); C08J 3/22(2006.01); C08K 3/013(2018.01); C08K 3/04(2006.01); C08L 67/00(2006.01); C08L 71/00(2006.01); C08L 71/12(2006.01); C08L 77/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스터(polyester), 폴리아릴렌에테르(polyarylene ether), 폴리올레핀 (polyolefin), 블록 공중합 충격보강제(block copolymerization impact modifier), 다관능 반응화제(multifunctional reactant), 카본나노튜브(carbon nanotube), 카본나노플레이트(carbon nanoplate)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2022-0017356 A (LG CHEM, LTD.) 11 February 2022 (2022-02-11)<br>See claims 1-17; paragraphs [0063]-[0199]; and table 1 (example 1). | 13 |
| Y | | 1-12,14-16 |
| Y | KR 10-2008-0041709 A (GENERAL ELECTRIC COMPANY) 13 May 2008 (2008-05-13)<br>See claim 1; paragraphs [0037]-[0041], [0045] and [0057]-[0059]; and tables 1-2. | 1-12,14-16 |
| A | KR 10-2020-0036574 A (LOTTE ADVANCED MATERIALS CO., LTD.) 07 April 2020 (2020-04-07)<br>See entire document. | 1-16 |
| A | KR 10-2016-0121383 A (LOTTE ADVANCED MATERIALS CO., LTD.) 19 October 2016 (2016-10-19)<br>See entire document. | 1-16 |

☑ Further documents are listed in the continuation of Box C.       ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **21 July 2023** | **21 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/005518** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2020-0053701 A (LG CHEM, LTD.) 19 May 2020 (2020-05-19) See entire document. | 1-16 |

Form PCT/ISA/210 (second sheet) (July 2022)

**INTERNATIONAL SEARCH REPORT**
Information on patent family members

| International application No. |
| --- |
| **PCT/KR2023/005518** |

| Patent document cited in search report | | | Publication date (day/month/year) | Patent family member(s) | | | Publication date (day/month/year) |
| --- | --- | --- | --- | --- | --- | --- | --- |
| KR | 10-2022-0017356 | A | 11 February 2022 | CN | 114302915 | A | 08 April 2022 |
| | | | | EP | 3992245 | A1 | 04 May 2022 |
| | | | | EP | 3992245 | A4 | 28 September 2022 |
| | | | | JP | 2022-548469 | A | 21 November 2022 |
| | | | | JP | 7254242 | B2 | 07 April 2023 |
| | | | | US | 2022-0356343 | A1 | 10 November 2022 |
| | | | | WO | 2022-030773 | A1 | 10 February 2022 |
| KR | 10-2008-0041709 | A | 13 May 2008 | CN | 101253245 | A | 27 August 2008 |
| | | | | EP | 1934285 | A1 | 25 June 2008 |
| | | | | US | 2007-0049690 | A1 | 01 March 2007 |
| | | | | WO | 2007-027387 | A1 | 08 March 2007 |
| KR | 10-2020-0036574 | A | 07 April 2020 | EP | 3858920 | A1 | 04 August 2021 |
| | | | | EP | 3858920 | A4 | 22 June 2022 |
| | | | | KR | 10-2227119 | B1 | 11 March 2021 |
| | | | | WO | 2020-067673 | A1 | 02 April 2020 |
| KR | 10-2016-0121383 | A | 19 October 2016 | EP | 3078712 | A1 | 12 October 2016 |
| | | | | KR | 10-1875266 | B1 | 05 July 2018 |
| | | | | US | 10056168 | B2 | 21 August 2018 |
| | | | | US | 2016-0300639 | A1 | 13 October 2016 |
| KR | 10-2020-0053701 | A | 19 May 2020 | CN | 111670220 | A | 15 September 2020 |
| | | | | CN | 111670220 | B | 10 March 2023 |
| | | | | EP | 3693412 | A1 | 12 August 2020 |
| | | | | EP | 3693412 | A4 | 24 March 2021 |
| | | | | JP | 2021-509124 | A | 18 March 2021 |
| | | | | JP | 7055871 | B2 | 18 April 2022 |
| | | | | KR | 10-2247186 | B1 | 04 May 2021 |
| | | | | US | 2020-0332119 | A1 | 22 October 2020 |
| | | | | WO | 2020-096400 | A1 | 14 May 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220106747

- US 6352654 B